# EUROPEAN PATENT APPLICATION

(11) **EP 4 581 993 A1**
(43) Date of publication of application: **09.07.2025**
(21) Application number: 24150197.2
(22) Date of filing: 03.01.2024
(51) Int. Cl.: A47J 44/00

(54) **KITCHEN APPLIANCE HAVING A MOVEABLE FOOD RECEPTACLE**

(71) Applicant: Versuni Holding B.V., 5656 AE Eindhoven (NL)
(72) Inventor: SAMONIGG, Gert, 5656 AE Eindhoven (NL)
(74) Representative: Vollering, Stefanus Franciscus Maria

(57) **Abstract**

Provided is a kitchen appliance (100) comprising a heating system (102) and a receptacle (104) for receiving food ingredients. The receptacle is moveable between at least a first position (118) in which the receptacle is arranged to enable the heating system to heat the food ingredients, and a second position (120) in which the receptacle is arranged to enable at least one food preparation process, e.g. at least one pre-cooking food preparation process, to be implemented.

## Description

### FIELD OF THE INVENTION

The invention relates to a kitchen appliance having a moveable receptacle in which food ingredients can be received.

### BACKGROUND OF THE INVENTION

Various kitchen appliances are known that are capable of implementing more than one cooking operation. For example, double-drawer air fryers are known that are capable of cooking two dishes in parallel. Such double-drawer air fryers may permit different cooking times and temperatures to be used in each drawer, and can allow synchronizing of the completion time for the cooking in the two drawers so that food cooked in both drawers is ready at the same time.

Multi-cookers and so-called automatic cooking devices are also known for performing different food preparation and cooking steps. In spite of the term "automatic", automatic cooking devices tend to require intermittent user interaction, with the term "automatic" merely referring to digital guidance provided to the user for assisting device operation. In common with "multicookers", the user tends to be required to change tools, containers or lids in order to enable different food preparation and cooking steps to be implemented.

It may be desirable to thaw frozen ingredients or frozen pre-cooked food and to subsequently heat/cook the thawed food. In particular, it may be desirable for this to be implemented without requiring the user's attention or even in their absence. For example, the user may wish to prepare a kitchen appliance with food ingredients in the morning before leaving home and to have a cooked meal ready shortly after their return.

In such an example, the food ingredients should not be allowed to spoil, which may necessitate cooling of the food ingredients stored in the kitchen appliance. However, such cooling may present challenges given that the kitchen appliance is also required to heat/cook the food ingredients.

### SUMMARY OF THE INVENTION

The invention is defined by the claims.

According to examples in accordance with an aspect of the invention, there is provided a kitchen appliance comprising: a heating system; a receptacle for receiving food ingredients; a cooking chamber member for cooperating with the receptacle so that the receptacle and the cooking chamber member define wall portions of a cooking chamber, the heating system being arranged to heat said cooking chamber; a food preparation assembly for implementing at least one food preparation process of a type that is not implementable in the cooking chamber; a receptacle transfer assembly configured to permit the receptacle to move between at least: a first position in which the receptacle and the cooking chamber member cooperate with each other to define the wall portions of the cooking chamber to enable a food cooking process to be implemented, and a second position in which the receptacle is released from the cooking chamber member and is positioned relative to the food preparation assembly to enable the at least one food preparation process to be implemented.

The movement of the receptacle between the first and second positions may provide a convenient way of implementing the food preparation process(es) and the cooking/heating of the food ingredients using the same kitchen appliance.

In particlar, the capability to release the receptacle from the cooking chamber member can assist to separate the food preparation process(es) implemented by the food preparation assembly from the heating or cooking process that takes place in the cooking chamber. In this way, the risk of the food preparation process(es) being adversely influenced by the heating or cooking process, and/or the risk of the heating or cooking process being adversely influenced by the food preparation process(es) can be lessened or removed.

The receptacle transfer assembly may be configured to guide movement of the receptacle between the first position and the second position.

Regarding the food preparation assembly, it is generally noted that the food preparation process(es) may be preparatory process(es) in which the food ingredients are prepared and/or dispensed before being cooked in the cooking chamber. Accordingly, the at least one food preparation process may be at least one pre-cooking food preparation process.

Each of the at least one food preparation process implementable by the food preparation assembly may not involve cooking of the food ingredients using heat.

In some embodiments, the food preparation assembly comprises a cooling system for cooling the food ingredients. The cooling system may assist to keep the food ingredients cool, e.g. when the receptacle is at the second position before cooking of the food ingredients takes place in the cooking chamber.

The cooling system may include at least one of: a powered cooling system for active cooling of the food ingredients; and a passive cooling system.

The powered cooling system may include one or more thermoelectric elements, e.g. Peltier element(s).

In some embodiments, the powered cooling system comprises a fan assembly arranged to remove heat generated by the thermoelectric element(s).

The passive cooling system may comprise one or more cooling blocks, and a holder for the cooling block(s), with the holder being arranged to provide cooling to the food ingredients when the cooling block(s) are received in the holder. This way of implementing the cooling system may benefit from being relatively simple and inexpensive.

In some embodiments, the kitchen appliance includes a cooling chamber member for cooperating with the receptacle, when the receptacle is in the second position, so that the receptacle and the cooling chamber member define wall sections of a cooling chamber.

In such embodiments, the cooling system may be arranged to cool the cooling chamber.

In some embodiments, the cooling chamber member comprises, e.g. is in the form of, a hood element for closing the receptacle from above the receptacle when the kitchen appliance is orientated for use.

In some embodiments, the food preparation assembly comprises a mechanical food processing system for mechanically processing the food ingredients. The mechanical food processing system may enable mechanical processing of the food ingredients, e.g. cutting, slicing, spiralizing, and/or extruding of the food ingredients, to be conveniently implemented in the same kitchen appliance that subsequently heats/cooks the mechanically processed food ingredients.

In some embodiments, the mechanical food processing system comprises one or more of a food cutting system, a food slicing system, a food spiralizing system, and a food extruding system.

Alternatively or additionally to the cooling system and/or the mechanical food processing system, the food preparation assembly may comprise a dispensing assembly for dispensing food ingredients into the receptacle when the receptacle is moved to or at the second position.

The kitchen appliance may include a storage container for storing the food ingredients, with the dispensing assembly being configured to dispense the food ingredients from the storage container into the receptacle when the receptacle is in the second position.

In some embodiments, the cooling system, e.g. the powered cooling system and/or the passive cooling system, is arranged to provide cooling to the storage container.

Thus, the food ingredients may be kept cool prior to being dispensed by the dispensing assembly into the receptacle.

More generally, the receptacle transfer assembly may engage with the receptacle, in order for the receptacle transfer assembly to permit the receptacle to move between at least the first position and the second position.

The receptacle transfer assembly preferably releasably engages the receptacle.

Release of the receptacle from the receptacle transfer assembly may facilitate cleaning of the kitchen appliance, including the released receptacle.

The receptacle transfer assembly may be configured to permit the receptacle to move, e.g. to guide movement of the receptacle, between at least the first position and the second position while the receptacle remains engaged with the receptacle transfer assembly.

In some embodiments, the receptacle transfer assembly comprises a drive system for driving movement of the receptacle between at least the first position and the second position. Such a drive system may relieve burden on the user, since the user him/herself need not be burdened with having to manually move the receptacle between the first and second positions.

In some embodiments, the drive system may be controlled by a control system, e.g. a control system comprising one or more processors, configured to control movement of the receptacle between the first position and the second position. This may enable automatic control of heating/cooking of the food ingredients in the cooking chamber and/or the food preparation process(es) implemented by the food preparation assembly.

As an alternative or in addition to controlling movement of the receptacle, the control system may be configured to recommend movement of the receptacle between the first position and the second position, e.g. to assist the user in following a recipe. In such embodiments, the user him/herself may operate the drive system according to the recommendation, or may manually move the receptacle according to the recommendation.

The cooking chamber member may also have any suitable design that enables the cooking chamber member to cooperate with the receptacle so that the receptacle and the cooking chamber member define wall portions of the cooking chamber. In some embodiments, the cooking chamber member comprises, e.g. is in the form of, a hood member for closing the receptacle from above the receptacle when the kitchen appliance is orientated for use.

In some embodiments, the receptacle transfer assembly comprises a height adjustment arrangement configured to enable adjustment of height separation between the receptacle and the cooking chamber member. In such embodiments, the separation between the receptacle and the cooking chamber member, e.g. hood member, may be reduced by the height adjustment arrangement when the receptacle is moved to the first position. This may assist to close the cooking chamber sufficiently tightly to minimize energy loss during cooking or heating of the food ingredients in the cooking chamber.

As an alternative or in addition to the height adjustment arrangement, one or more sealing elements may be arranged to provide sealing engagement between the receptacle and the cooking chamber member when the receptacle and the cooking chamber member are cooperating with each other.

It is also noted that the cooking chamber member, e.g. hood member, may close the cooking chamber without the kitchen appliance being required to include the height adjustment arrangement and the sealing element(s).

In some embodiments, the receptacle transfer assembly includes a height adjustment system configured to enable adjustment of height separation between the receptacle and at least part of the food preparation assembly.

The height adjustment system may, for example, be configured to enable adjustment of height separation between the receptacle and the cooling chamber member. In such embodiments, the separation between the receptacle and the cooling chamber member, e.g. hood element, may be reduced by the height adjustment system when the receptacle is moved to the second position.

This may assist to close the cooling chamber sufficiently tightly to minimize energy loss and/or unwanted or excessive warming of the food ingredients during storage of the food ingredients in the cooling chamber.

In some embodiments, the receptacle transfer assembly is arranged to permit linear displacement of the receptacle between the first position and the second position.

In such embodiments, the linear displacement may, for example, be in a plane that is parallel to a plane of the kitchen counter-top on which the kitchen appliance is disposed in use.

More generally, the kitchen appliance can be a table-top kitchen appliance, for example a table-top kitchen appliance that comprises an air fryer and/or a food steaming device.

In some embodiments, the cooking chamber member and the food preparation assembly are arranged so that respective front portions of the cooking chamber member and the food preparation assembly are arranged side-by-side when the kitchen appliance is positioned for use, with the receptacle transfer assembly being configured to allow, e.g. guide, left-right movement of the receptacle between the first position and the second position. This may be a relatively convenient and intuitive arrangement for moving the receptacle between the first and second positions.

In alternative embodiments, the cooking chamber member and the food preparation assembly are arranged one behind the other so that one of the cooking chamber member and the food preparation assembly is closer to a front of the kitchen appliance than the other of the cooking chamber member and the food preparation assembly when the kitchen appliance is positioned for use, with the receptacle transfer assembly being configured to allow, e.g. guide, forwards-backwards movement of the receptacle between the first position and the second position.

This architecture may be more appropriate than the side-by-side arrangement of the cooking chamber member and the food preparation assembly for some kitchen spaces. The receptacle may, for example, take the form of a drawer that moves along a single axis: forwards/in and backwards/out. Accordingly, the receptacle transfer assembly may only require a relatively simple one-dimensional receptacle sliding mechanism.

In some embodiments, the heating system comprises a heating element and a circulation system for circulating air heated by the heating element in the cooking chamber.

Thus, the food ingredients may be subjected to convection heating/cooking when the receptacle is in the first position.

In some embodiments, the circulation system is arranged so that the heated air traverses a height of the cooking chamber when the kitchen appliance is orientated for use.

The airflow traversing the height of the cooking chamber may mean that air is circulated upwardly through the food ingredients received in the receptacle in the direction of the top of the cooking chamber and/or downwardly through the food ingredients received in the receptacle in the direction of the bottom of the cooking chamber.

Circulating air through, rather than merely across, the food ingredients may assist to provide a frying-type cooking effect, relatively homogeneous cooking of the food ingredients and/or a shorter cooking time.

In some embodiments, the heating system comprises a food steaming system for steam cooking the food ingredients.

The food steaming system may, for example, include a water holder or dosing system and a heating element arranged to vaporize water held in the water holder or dosed by the dosing system.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIGs. 1A to 1F provide schematic views of a kitchen appliance according to a first example;
FIG. 2 schematically depicts a receptacle transfer assembly included in a kitchen appliance according to a second example;
FIG. 3 schematically depicts a receptacle transfer assembly included a kitchen appliance according to a third example;
FIGs. 4A and 4B provide schematic views of a kitchen appliance according to a fourth example;
FIGs. 5A and 5B provide schematic views of a kitchen appliance according to a fifth example;
FIGs. 6A and 6B provide schematic views of a kitchen appliance according to a sixth example;
FIG. 7 provides a schematic view of a kitchen appliance according to a seventh example;
FIG. 8 provides a simplified view of movement of a receptacle of a kitchen appliance according to an eighth example;
FIG. 9 provides a simplified view of movement of a receptacle of a kitchen appliance according to a ninth example;
FIG. 10 shows a kitchen appliance according to a tenth example;
FIG. 11 shows a kitchen appliance according to an eleventh example;
FIG. 12 shows a kitchen appliance according to a twelfth example;
FIG. 13 provides an exploded view of the kitchen appliance shown in FIG. 11;
FIGs. 14A and 14B provide schematic views of a kitchen appliance according to a thirteenth example; and
FIGs. 15A and 15B provide schematic views of a kitchen appliance according to a fourteenth example.

### DETAILED DESCRIPTION OF THE EMBODIMENTS

The invention will be described with reference to the Figures.

It should be understood that the detailed description and specific examples, while indicating exemplary embodiments of the apparatus, systems, and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen appliance comprising a heating system and a receptacle for receiving food ingredients. The receptacle is moveable between at least a first position in which the receptacle is arranged to enable the heating system to heat the food ingredients, and a second position in which the receptacle is arranged to enable at least one food preparation process, e.g. at least one pre-cooking food preparation process, to be implemented.

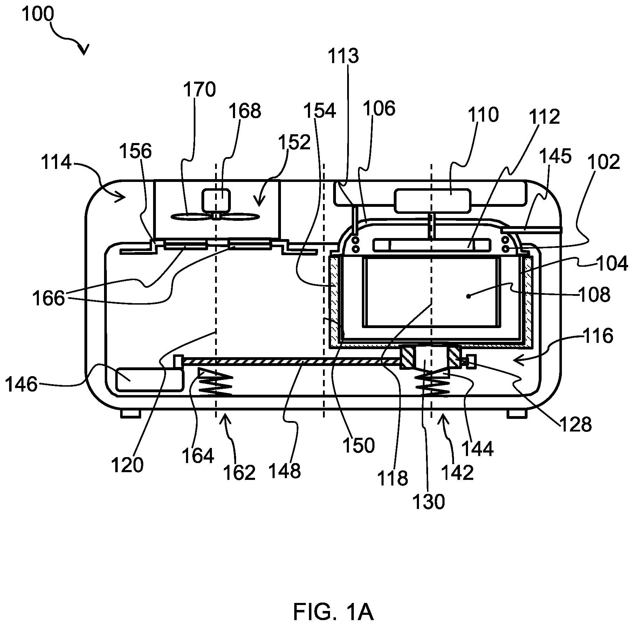

FIG. 1A schematically depicts a kitchen appliance 100 according to a non-limiting example. The kitchen appliance 100 comprises a heating system 102, and a receptacle 104 for receiving food ingredients (not visible in FIG. 1A).

Evident in FIG. 1A is a cooking chamber member 106 that cooperates with the receptacle 104 so that the receptacle 104 and the cooking chamber member 106 define wall portions of a cooking chamber 108.

The receptacle 104 can have any suitable design provided that the receptacle 104 is capable of receiving the food ingredients and enabling the food ingredients received therein to be heated or cooked when the receptacle 104 and the cooking chamber member 106 cooperate with each other so that the receptacle 104 and the cooking chamber member 106 define wall portions of the cooking chamber 108. In some embodiments, the receptacle 104 comprises a pan, and/or comprises an insert, e.g. food basket, receivable in a pan.

The receptacle 104 can be formed from any suitable material capable of withstanding heating and cooking conditions in the cooking chamber 108. In some embodiments, the receptacle 104 comprises a metallic material, such as stainless steel and/or aluminium.

The cooking chamber member 106 may also have any suitable design that enables the cooking chamber member 106 to cooperate with the receptacle 104 so that the receptacle 104 and the cooking chamber member 106 define wall portions of the cooking chamber 108. In some embodiments, such as shown in FIG. 1A, the cooking chamber member 104 comprises, e.g. is in the form of, a hood member for closing the receptacle 104 from above the receptacle 104 when the kitchen appliance 100 is orientated for use.

The cooking chamber member 106 can be formed from any suitable material capable of withstanding heating and cooking conditions in the cooking chamber 108. In some embodiments, the cooking chamber member 106 comprises a metallic material, such as stainless steel and/or aluminium.

FIG. 1A shows the heating system 102 arranged to heat the cooking chamber 108. In at least some embodiments, such as shown in FIG. 1A, the heating system 102 comprises a heating element, e.g. a spiral heating element. It is noted that the circles used in FIG. 1A to schematically represent the heating system 102 are intended to denote coils of a spiral heating element included in the heating system 102.

The heating system 102, e.g. the heating element thereof, can be arranged to heat the cooking chamber 108 in any suitable manner. In some embodiments, such as shown in FIG. 1A, the heating system 102 is configured to heat air circulated in the cooking chamber 108. For example, the kitchen appliance 100 may comprise a circulation system 110, 112 for circulating air heated by the heating element in the cooking chamber 108. Such a circulation system 110, 112 can, for instance, include a motor 110 and a fan 112 rotatable by the motor 110 in order to provide the air circulation.

In some embodiments, such as shown in FIG. 1A, the circulation system 110, 112 is arranged so that the heated air traverses a height of the cooking chamber 108 when the kitchen appliance 100 is orientated for use.

It is noted that the height of the cooking chamber 102 is defined between the top and the bottom of the cooking chamber 102 when the kitchen appliance 100 is orientated for use, as shown, for example, in FIG. 1A.

The bottom of the cooking chamber 108 may be proximal to a kitchen countertop on which the kitchen appliance 100 is disposed for use, with the top of the cooking chamber 108 being above and distal with respect to the kitchen countertop.

The airflow traversing the height of the cooking chamber 108 may mean that air is circulated upwardly through the food ingredients received in the receptacle 104 in the direction of the top of the cooking chamber 108 and/or downwardly through the food ingredients received in the receptacle 104 in the direction of the bottom of the cooking chamber 108.

Circulating air through, rather than merely across, the food ingredients may assist to provide a frying-type cooking effect, relatively homogeneous cooking of the food ingredients and/or a shorter cooking time.

In some embodiments, the heating system 102 is configured to permit steaming of the food ingredients received in the receptacle 104, e.g. when the receptacle 104 and the cooking chamber member 106 are cooperating with each other to define the wall portions of the cooking chamber 108. In such embodiments, the heating system 102 may, for example, include a food steaming system 113.

Such a food steaming system 113 may, for example, include a water holder or dosing system and a heating element arranged to vaporize water held in the water holder or dosed by the dosing system.

The thus generated steam may be provided in, e.g. delivered to, the cooking chamber 108, and may, for example, also be circulated by the circulation system 110, 112.

More generally, the kitchen appliance 100 can be a table-top kitchen appliance 100, for example a table-top kitchen appliance 100 that comprises an air fryer and/or a food steaming device.

The food cooking process implementable in the cooking chamber 108 is not particularly limited, and may include one or more of air frying, air steaming, grilling, boiling, etc.

Referring again to FIG. 1A, the kitchen appliance 100 comprises a food preparation assembly 114 for implementing at least one food preparation process of a type that is not implementable in the cooking chamber 108. Moreover, a receptacle transfer assembly 116 is arranged to permit, e.g. guide, movement of the receptacle 104 between at least: a first position 118 in which the receptacle 104 and the cooking chamber member 106 cooperate with each other to define the wall portions of the cooking chamber 108, and a second position 120 in which the receptacle 104 is released from the cooking chamber member 106 and is positioned relative to the food preparation assembly 114 to enable the at least one food preparation process to be implemented.

The capability to release the receptacle 104 from the cooking chamber member 106 can assist to separate the food preparation process(es) implemented by the food preparation assembly 114 from the heating or cooking process that takes place in the cooking chamber 108. In this way, the risk of the food preparation process(es) being adversely influenced by the heating or cooking process, and/or the risk of the heating or cooking process being adversely influenced by the food preparation process(es) can be lessened or removed.

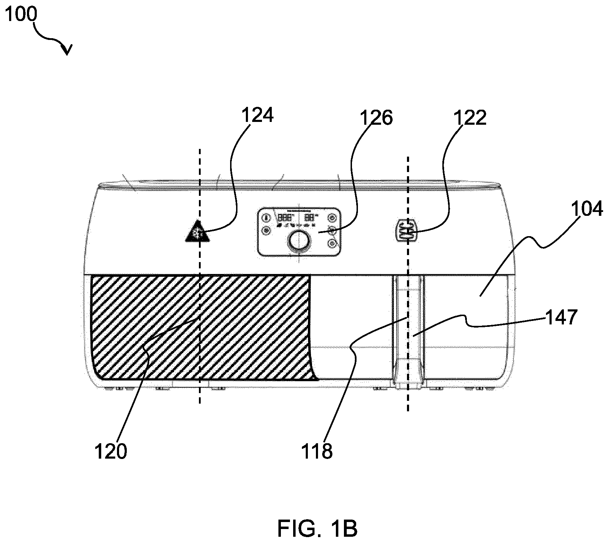

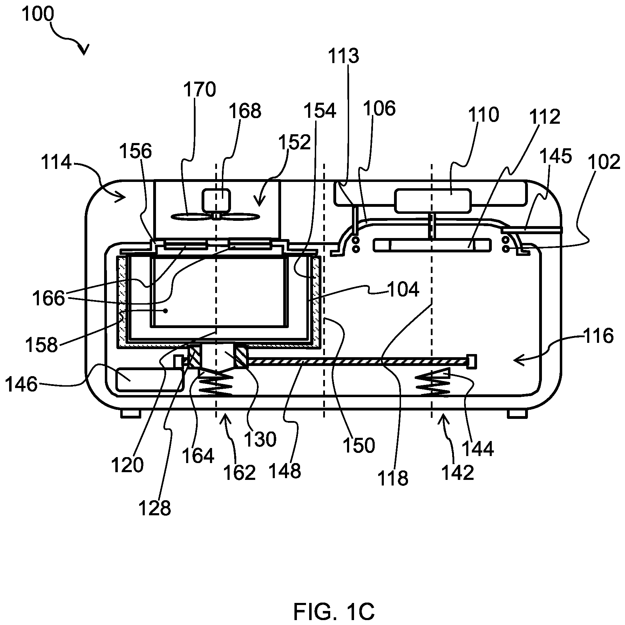

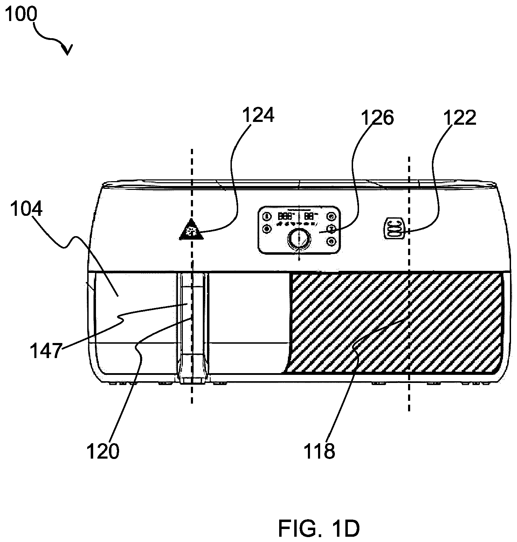

The receptacle transfer assembly 116 can be configured in any suitable manner provided that the receptacle transfer assembly 116 is capable of allowing movement of the receptacle 104 between at least the first position 118 and the second position 120. In some embodiments, and referring to FIGs. 1A to 1D, the receptacle transfer assembly 116 is arranged to permit linear displacement of the receptacle 104 between the first position 118 (see FIGs. 1A and 1B) and the second position 120 (see FIGs. 1C and 1D).

In such embodiments, the linear displacement may, for example, be in a plane that is parallel to a plane of the kitchen counter-top on which the kitchen appliance 100 is disposed in use.

In some embodiments, and still referring to FIGs. 1A to 1D, the cooking chamber member 106 and the food preparation assembly 114 are arranged so that respective front portions of the cooking chamber member 106 and the food preparation assembly 114 are arranged side-by-side when the kitchen appliance 100 is positioned for use, with the receptacle transfer assembly 116 being configured to allow, e.g. guide, left-right movement of the receptacle 104 between the first position 118 and the second position 120. This may be a relatively convenient and intuitive arrangement for moving the receptacle 104 between the first and second positions 118, 120. Other configurations are nonetheless conceivable, as explained herein below.

In some embodiments, and referring to FIGs. 1B and 1D, the kitchen appliance 100 includes a first visual indicator 122 for indicating the first position 118, for example for indicating that heating or cooking, e.g. air frying, is provided/implementable when the receptacle 104 is in the first position 118.

Alternatively or additionally, the kitchen appliance 100 may include a second visual indicator 124 for indicating the second position 120, for example for indicating the food preparation process(es) provided/implementable when the receptacle 104 is in the second position 120.

In some embodiments, and still referring to FIGs. 1B and 1D, the kitchen appliance 100 includes a user interface 126 for controlling the kitchen appliance 100, for instance a user interface 126 comprising one or more of the following: knob(s), button(s), and touch screen(s).

Such a user interface 126 may, for example, be arranged between the first visual indicator 122 and the second visual indicator 124.

More generally, the receptacle transfer assembly 116 may engage with the receptacle 104, as shown in FIGs. 1A to 1E, in order for the receptacle transfer assembly 116 to permit the receptacle 104 to move between at least the first position 118 and the second position 120.

The receptacle transfer assembly 116 preferably releasably engages the receptacle 104.

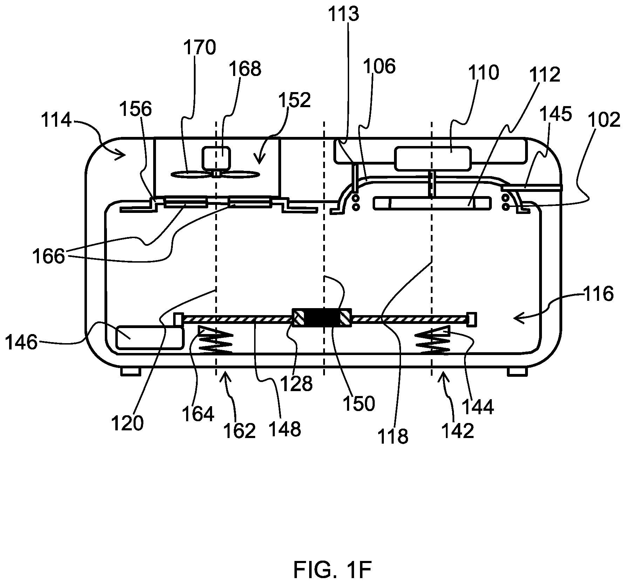

Release of the receptacle 104 from the receptacle transfer assembly 116 may facilitate cleaning of the kitchen appliance 100, including the released receptacle 104. FIG. 1F schematically shows the remainder of the kitchen appliance 100 once the receptacle 104 has been released from the receptacle transfer assembly 116.

The receptacle transfer assembly 116 may be configured to permit the receptacle 104 to move between at least the first position 118 and the second position 120 while the receptacle 104 remains engaged with the receptacle transfer assembly 116, as shown in FIGs. 1A to 1E.

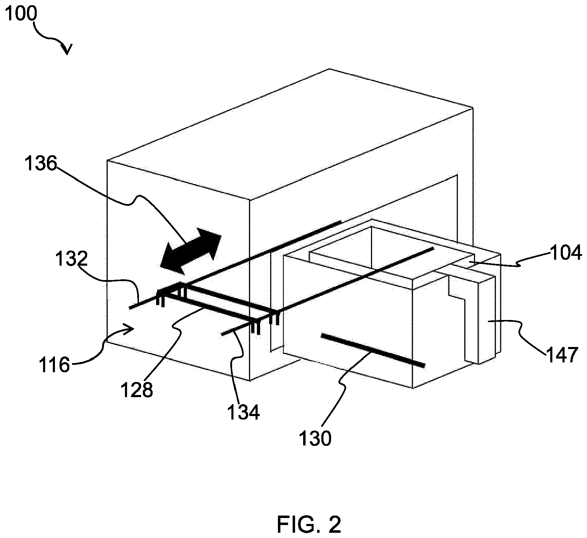

This engagement can be implemented in any suitable manner. In some embodiments, such as shown in FIGs. 1A to 1F and 2, the receptacle transfer assembly 116 includes a guide member 128, e.g. a U-shaped guide member 128, configured to engage with an engagement member 130, e.g. a slide stone, mounted to the receptacle 104.

With reference to FIG. 2, the receptacle transfer assembly 116 may include one or more sliders 132, 134 for providing a track on which the receptacle 104 can slide between the first position 118 and the second position 120.

In embodiments in which the receptacle 104 can engage with the receptacle transfer assembly 116 via the guide member 128 engaging with the engagement member 130 mounted to the receptacle 104, the guide member 128 may hold the receptacle 104 on the track provided by the slider(s) 132, 134.

The double-headed arrow 136 in FIG. 2 denotes the direction of movement of the receptacle 104 between the first position 118 and the second position 120 along the track provided by the slider(s) 132, 134.

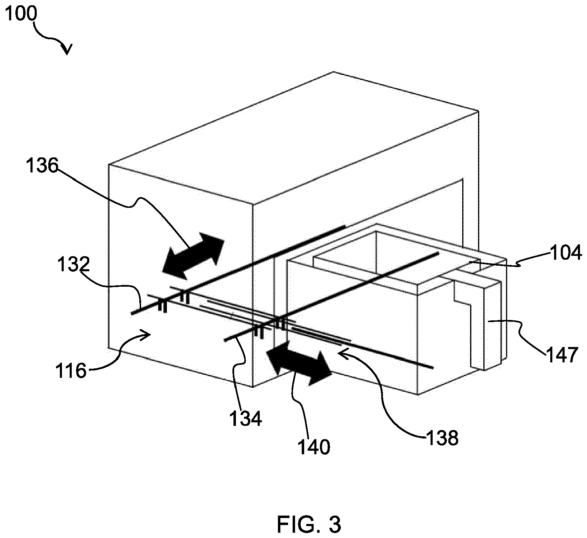

In some embodiments, such as shown in FIG. 3, the kitchen appliance 100 comprises a telescopic rail system 138 for moving the receptacle 104 relative to at least part of the receptacle transfer assembly 116, e.g. the slider(s) 132, 134, in order to gain access to the receptacle 104 and to replace the receptacle 104 in the kitchen appliance 100 (see the double-headed arrow 140 in FIG. 3).

In such embodiments, the rail system 138 may be additionally guided along the track provided by the slider(s) 132, 134.

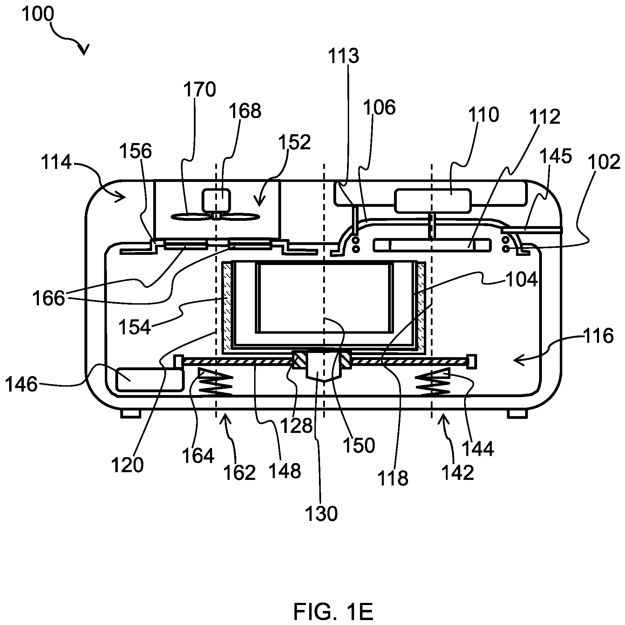

In some embodiments, and referring again to FIGs. 1A and 1E, the receptacle transfer assembly 116 comprises a height adjustment arrangement 142 configured to enable adjustment of height separation between the receptacle 104 and the cooking chamber member 106. In such embodiments, the separation between the receptacle 104 and the cooking chamber member 106, e.g. hood member, may be reduced by the height adjustment arrangement 142 when the receptacle 104 is moved to the first position 118.

This may assist to close the cooking chamber 108 sufficiently tightly to minimize energy loss during cooking or heating of the food ingredients in the cooking chamber 108.

The height adjustment arrangement 142 can be configured in any suitable manner. In some embodiments, such as shown in FIGs. 1A to 1F, the height adjustment arrangement 142 comprises a spring-loaded wedge 144 arranged to adjust the height separation between the receptacle 104 and the cooking chamber member 106 according to positioning of the receptacle 104, e.g. and in particular the engagement member 130, along the spring-loaded wedge 144.

In other embodiments, the height adjustment arrangement 142 comprises cam(s), magnet(s), etc. for enabling adjustment of the height separation between the receptacle 104 and the cooking chamber member 106.

As an alternative or in addition to the height adjustment arrangement 142, one or more sealing elements (not visible) may be arranged to provide sealing engagement between the receptacle 104 and the cooking chamber member 106 when the receptacle 104 and the cooking chamber member 106 are cooperating with each other.

It is generally noted that gaps between the receptacle 104 and the cooking chamber member 106, e.g. hood member, are preferably minimized in order to limit or prevent air, steam and energy losses, particularly in embodiments in which the kitchen appliance 100 includes the circulation system 110, 112. This may implicitly require the receptacle 104 to be accurately positioned by the receptacle transfer assembly 116 (at least) at the first position 118.

The kitchen appliance 100 may include a vent 145 that enables release of elevated pressure in the cooking chamber 108. In alternative embodiments, pressure cooking may be implementable in the cooking chamber 108.

A sealing system (not shown in FIGs. 1A to 1F) may be provided for sealing the receptacle 104 and the cooking chamber member 106 to each other to enable pressure cooking to be implemented in the cooking chamber 108.

In some embodiments, such as shown in FIGs. 1A to 1F, the receptacle transfer assembly 116 comprises a drive system 146 for driving movement of the receptacle 104 between at least the first position 118 and the second position 120. Such a drive system 146 may relieve burden on the user, since the user him/herself need not be burdened with having to manually move the receptacle 104 between the first and second positions 118, 120.

In some embodiments, the drive system 146 may be controlled by a control system, e.g. a control system comprising one or more processors, configured to control movement of the receptacle 104 between the first position 118 and the second position 120. This may enable automatic control of heating/cooking of the food ingredients in the cooking chamber 108 and/or the food preparation process(es) implemented by the food preparation assembly 114.

As an alternative or in addition to controlling movement of the receptacle 104, the control system may be configured to recommend movement of the receptacle 104 between the first position 118 and the second position 120, e.g. to assist the user in following a recipe. In such embodiments, the user him/herself may operate the drive system 146 according to the recommendation, or may manually move the receptacle 104 according to the recommendation.

The recommendation can be provided to the user in any suitable manner. In some embodiments, the control system is configured to control the user interface 126 to communicate, e.g. display and/or audibly communicate, the recommendation to the user.

In some embodiments, such as shown in FIGs. 1B, 1D, 2 and 3, the receptacle 104 is provided with a handle 147 graspable by the user to enable the user to move the receptacle 104, e.g. when engaging/releasing the receptacle 104 and the receptacle transfer assembly 116 and/or to enable the user to manually move the receptacle 104 between the first position 118 and the second position 120.

It is generally noted that embodiments are contemplated in which no drive system is included in the kitchen appliance 100, with the receptacle transfer assembly 116 correspondingly permitting, e.g. guiding, manual movement of the receptacle 104, e.g. the receptacle 104 engaged with the receptacle transfer assembly 116, between (at least) the first and second positions 118, 120.

The drive system 146 can be implemented in any suitable manner. In some embodiments, such as shown in FIGs. 1A to 1F, the drive system 146 comprises a rod 148 rotatable by a motor. The rod 148 may be rotatable along an axis extending along the rod 148. A threaded connection may connect the rod 148 (directly or indirectly) to the receptacle 104 such that when the rod 148 is turned, the receptacle 104 is moved via the threaded connection along the rod 148 between the first and second positions 118, 120.

In such embodiments, rotation of the rod 148 in a first direction may cause movement of the receptacle 104 towards the first position 118 (see FIGs. 1A and 1B), with rotation of the rod 148 in a second direction opposite the first direction causing movement of the receptacle 104 towards the second position 120 (see FIGs. 1C and 1D).

It is noted that the threaded connection may be provided between the rod 148 and part of the guide member 128.

In some embodiments, and as best shown in FIG. 1E, the receptacle transfer assembly 116 may permit movement of the receptacle 104 to a third position 150, e.g. an intermediate or resting position between the first and second positions 118, 120.

For instance, and referring to FIGs. 1E and 1F, the third position 150, e.g. resting/intermediate position, may be provided for engagement and release of the receptacle 104 and the receptacle transfer assembly 116.

Once engaged with the receptacle transfer assembly 116, the receptacle 104 may be moved between the first and second positions 118, 120 by operation of the drive system 146 and/or manually, as previously described.

Whilst not visible in FIGs. 1A to 1F, the guide member 128 may be supported and guided by the slider(s) 132, 134 of the type previously described above in relation to FIGs. 2 and 3.

In some embodiments, the drive system's 146 motor may be configured or controllable to stop movement of the receptacle 104, e.g. by stopping movement of the guide member 128, at the third position 150. In such embodiments, the drive system 146 may, for instance, enable positioning of the receptacle 104 for engagement/release of the receptacle 104 and the receptacle transfer assembly 116.

Regarding the food preparation assembly 114, it is generally noted that the food preparation process(es) may be preparatory process(es) in which the food ingredients are prepared and/or dispensed before being cooked in the cooking chamber 108. Accordingly, the at least one food preparation process may be at least one pre-cooking food preparation process.

In some embodiments, such as shown in FIGs. 1A to 1F, the food preparation assembly 114 comprises a cooling system 152 for cooling the food ingredients. The cooling system 152 may assist to keep the food ingredients cool, e.g. when the receptacle 104 is at the second position 120 before cooking of the food ingredients takes place in the cooking chamber 108.

For example, the cooling system 152 may assist to keep the food ingredients cool prior to the receptacle 104 being moved automatically by the control system controlling the drive system 146 to move the receptacle 104 from the second position 120 to the first position 118.

Thus, the cooling system 152 may facilitate use of the kitchen appliance 100 that involves receiving the food ingredients in the receptacle 104 in advance of cooking that takes place at a later stage, with or without the user having to be present when the cooking subsequently takes place.

For such delayed cooking, it may be beneficial to receive pre-cooled food ingredients in the receptacle 104, to minimize cooling energy expenditure by the cooking system 152 and/or to extend the time that the food ingredients can be safely stored at the second position 120.

In some embodiments, the cooling system 152 may merely compensate for energy loss associated with warming of the food ingredients that otherwise takes place following their removal from, for example, a freezer.

In this way, the kitchen appliance 100 may not substitute for a dedicated food cooling appliance, e.g. a freezer, and hence may be operated without unreasonably high power consumption.

In some embodiments, the receptacle 104 is provided with thermal isolation material 154. The thermal isolation material 154 may assist to keep the food ingredients in the receptacle 104 cool, e.g. as a measure provided in addition to operation of the cooling system 152.

Thus, the thermal isolation material 154 can help to minimize energy loss.

As an alternative or in addition to the thermal isolation material 154, the kitchen appliance 100 may include a cooling chamber member 156 for cooperating with the receptacle 104, when the receptacle 104 is in the second position 120, so that the receptacle 104 and the cooling chamber member 156 define wall sections of a cooling chamber 158.

In such embodiments, the cooling system 152 may be arranged to cool the cooling chamber 158.

In some embodiments, such as shown in FIGs. 1A to 1F, the cooling chamber member 156 comprises, e.g. is in the form of, a hood element for closing the receptacle 104 from above the receptacle 104 when the kitchen appliance 100 is orientated for use.

In some embodiments, the receptacle transfer assembly 116 comprises a height adjustment system 162 configured to enable adjustment of height separation between the receptacle 104 and the cooling chamber member 156. In such embodiments, the separation between the receptacle 104 and the cooling chamber member 156, e.g. hood element, may be reduced by the height adjustment system 162 when the receptacle 104 is moved to the second position 120.

This may assist to close the cooling chamber 158 sufficiently tightly to minimize energy loss and/or unwanted or excessive warming of the food ingredients during storage of the food ingredients in the cooling chamber 158.

The height adjustment system 162 can be configured in any suitable manner. In some embodiments, such as shown in FIGs. 1A to 1F, the height adjustment system 162 comprises a (further) spring-loaded wedge 164 arranged to adjust the height separation between the receptacle 104 and the cooling chamber member 156 according to positioning of the receptacle 104 along the (further) spring-loaded wedge 164.

In embodiments in which the receptacle transfer assembly 116 comprises the height adjustment arrangement 142 and the height adjustment system 162, the former may, for example, include the spring-loaded wedge 144, while the latter includes the further spring-loaded wedge 164 spaced apart from the spring-loaded wedge 144.

For example, once the food ingredients are received in the receptacle 104, e.g. by being placed in a basket that is received in the receptacle 104 in the form of a pan, the receptacle 104 may be moved into the second position 120, in other words the cooling position. In the process of being moved into the second position 120, the engagement member 130, e.g. slide stone, may engage with the further spring-loaded wedge 164 so as to cause the receptacle 104 to be urged upwards towards the cooling chamber member 156.

This lifting action of the receptacle 104 may assist to close the cooling chamber 158, in other words may cause a closed cooling compartment to be formed by the receptacle 104, e.g. pan, and the cooling chamber member 156, e.g. hood element.

In other embodiments, the height adjustment system 162 comprises cam(s), magnet(s), etc. for enabling adjustment of the height separation between the receptacle 104 and the cooling chamber member 156, e.g. hood element.

The cooling system 152 can be configured in any suitable manner provided that the cooling system 152 is capable of providing cooling to the food ingredients, e.g. when the receptacle 104 is at the second position 120. In some embodiments, and still referring to FIGs. 1A to 1F, the cooling system 152 includes a powered cooling system for active cooling of the food ingredients.

The powered cooling system may include one or more thermoelectric elements 166, e.g. Peltier element(s).

In some embodiments, such as shown in FIGs. 1A to 1F, the powered cooling system comprises a fan assembly 168, 170 arranged to remove heat generated by the thermoelectric element(s) 166. It is noted that this removed heat could, in principle, be reused, e.g. elsewhere in the kitchen appliance 100.

It is noted that the fan assembly 168, 170 can have any suitable design. As shown in FIGs. 1A, 1C, 1E and 1F, the fan assembly 168, 170 comprises a motor 168 that rotates a fan 170 to provide an airflow that assists to remove heat generated by the thermoelectric element(s) 166.

Once the period during which the food ingredients are cooled is complete, the receptacle 104 may be moved, e.g. driven by the drive system 146, to the first position 118. When at the first position 118, the cooking/heating of the food ingredients may be implemented using the heating system 102, e.g. the food steaming system 113 in combination with the circulation system 110, 112.

It is noted that when the food steaming system 113 is employed in combination with the circulation system 110, 112 to cook/heat the food ingredients, the first position 118 may be regarded as an air-steam position.

The point of termination of the period during which the food ingredients are cooled may be determined by one or more of the following: the time that the user intends for the meal preparation to be complete, food type information, amount and starting condition of the food ingredients.

In some embodiments, the kitchen appliance 100 includes sensing element(s) for generating information relating to the food ingredients.

The data from the sensing element(s) may, for example, be provided to the control system, e.g. as well as user input data from the user interface 126.

The sensing element(s) may be arranged to generate data automatically in a smart automatic cooking system.

In some embodiments, the control system is configured to determine when to move the receptacle 104 between the first position 118 and the second position 120, for example when to move the receptacle 104 from the second, cooling, position 120 to the first position 118, based on the user input data from the user interface 126 and/or based on data from the sensing element(s).

Alternatively or additionally, the kitchen appliance 100 may be remotely activated by the user, e.g. to move the receptacle 104 between the first position 118 and the second position 120, for instance to move the receptacle 104 from the second, cooling, position 120 to the first position 118.

The kitchen appliance 100 may also be remotely controlled to initiate operation of the heating system 102 when the receptacle 104 is in the first position 118.

In some embodiments, the kitchen appliance 100 can be controlled remotely with a dedicated remote-control device or a smart device.

Cooking, transfer or food preparation operations could be programmed or provided by an automatic cooking recipe.

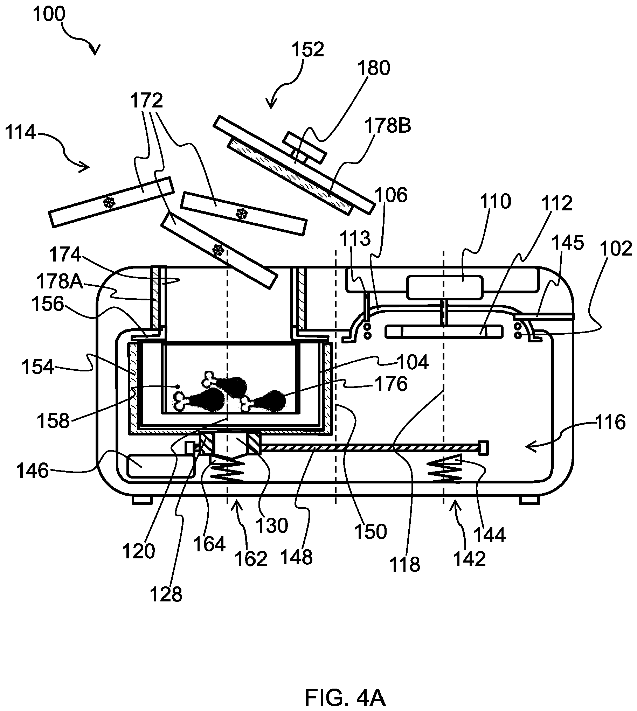

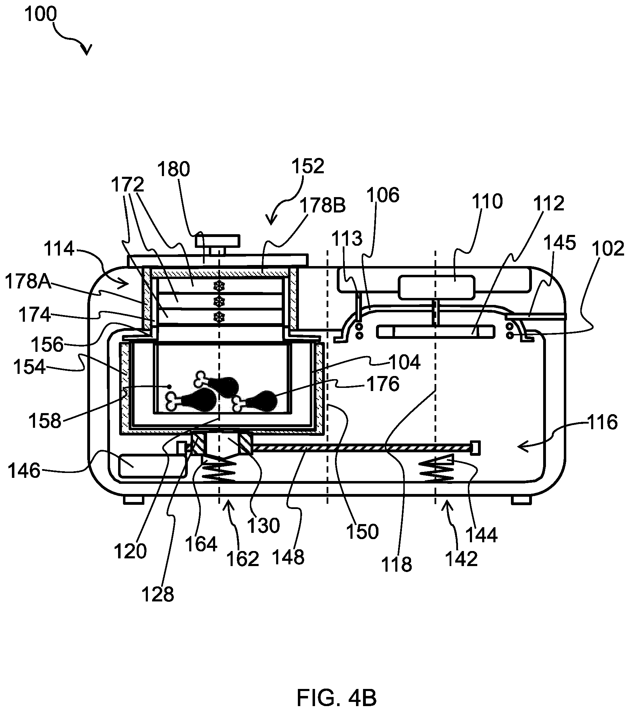

In some embodiments, such as shown in FIGs. 4A and 4B, the cooling system 152 comprises a passive cooling system comprising one or more cooling blocks 172; and a holder 174 for the cooling block(s), with the holder 174 being arranged to provide cooling to the food ingredients 176, e.g. received in the cooling chamber 158, when the cooling block(s) 172 are received in the holder 174. This way of implementing the cooling system 152 may benefit from being relatively simple and inexpensive.

The cooling duration with such a passive cooling system may, of course, be limited by capacity of the cooling block(s) 172 and heat transfer capabilities of the design.

The cooling block(s) 172 may, for example, be in the form of pre-freezable cartridges that, once removed from the freezer, can be placed in the holder 174. In such an example, the holder 174 can correspondingly be regarded as a cooling cartridge storage space.

The holder 174 may be thermally isolated, e.g. by a thermal isolation material 178A, 178B, except where the holder 174 permits thermal communication between the cooling blocks 172 and the food ingredients 176, e.g. at the base of the holder 174.

The kitchen appliance 100 may include a holder lid 180 for closing the holder 174. In such embodiments, the holder 174 may, for example, be provided with a first portion 178A of the thermal isolation material 178A, 178B, and the holder lid 180 may be provided with a second portion 178B of the thermal isolation material 178A, 178B.

In some embodiments, the control system is configured to recommend to the user, e.g. via the user interface 126, a number of cooling block(s) 172 to be received in the holder 174.

In such embodiments, the number of cooling block(s) 172 may be recommended based on (at least) the time that the user intends for the meal preparation to be complete.

Thus, for energy-saving purposes, the user may be instructed to insert only the number of cooling block(s) 172 estimated to be required, e.g. to provide an optimum balance between preliminary thawing of frozen food ingredients 176 and heating energy required during cooking in the cooking chamber 108.

The control system, e.g. smart automatic cooking system, may therefore assist with planning.

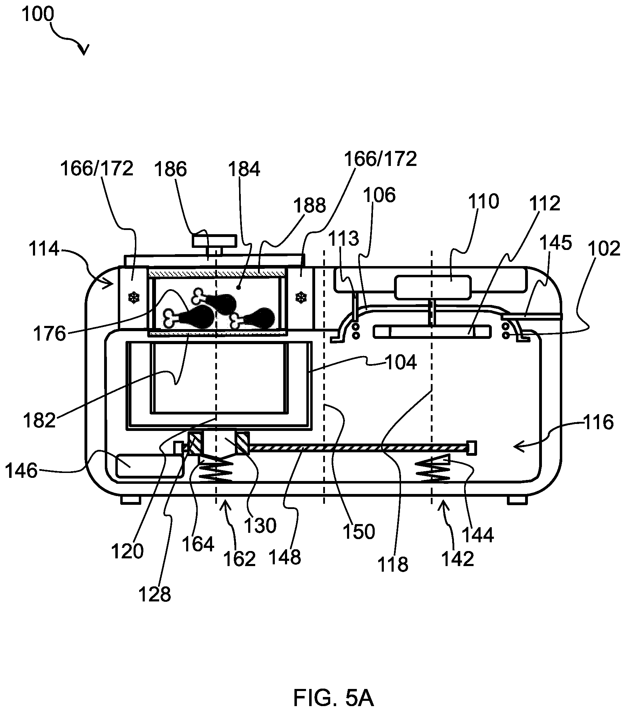

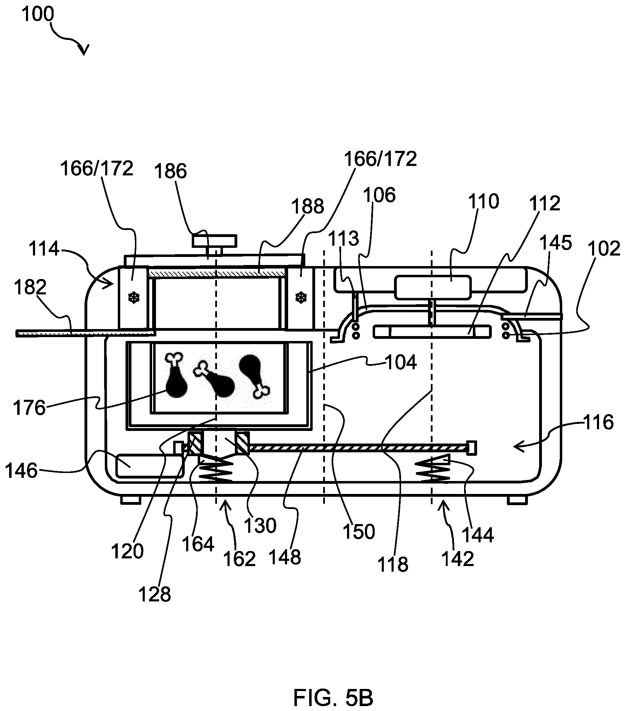

In some embodiments, such as shown in FIGs. 5A and 5B, the food preparation assembly 114 comprises a dispensing assembly 182 for dispensing food ingredients 176 into the receptacle 104 when the receptacle 104 is moved to or at the second position 120. Thus, the food preparation process(s) implemented by the food preparation assembly 114 may comprise dispensing of food ingredients 176 into the receptacle 104 when the receptacle 104 is in the second position 120.

The kitchen appliance 100 may include a storage container 184 for storing the food ingredients 176 (see FIG. 5A), with the dispensing assembly 182 being configured to dispense the food ingredients 176 from the storage container 184 into the receptacle 104 when the receptacle 104 is in the second position 120 (see FIG. 5B).

In some embodiments, such as shown in FIGs. 5A and 5B, the cooling system 152, e.g. the powered cooling system and/or the passive cooling system, is arranged to provide cooling to the storage container 184. Thus, the food ingredients 176 may be kept cool prior to being dispensed by the dispensing assembly 182 into the receptacle 104.

The storage container 184 may, for example, be closed with a storage container lid 186, e.g. a storage container lid 186 provided with thermal isolation material 188.

It is noted that owing to the cooling system 152 cooling the storage container 184, the receptacle 104 need not itself be provided with thermal isolation material 154.

The dispensing assembly 182 can have any suitable design. In some embodiments, such as shown in FIGs. 5A and 5B, the dispensing assembly 182 comprises a flap or shutter moveable to dispense the food ingredients 176 into the receptacle 104. Such a flap or shutter may be arranged, for example, at a base of the storage container 184.

Once the period during which the food ingredients 176 are stored, e.g. cooled, in the storage container 184 is complete, the dispensing assembly 182 may be controlled to dispense the food ingredients 176 into the receptacle 104. This may, for instance, involve moving the flap to cause the food ingredients 176 to be received in the receptacle 104, e.g. received in the basket inserted in the pan.

Alternatively or additionally, the dispensing assembly 182 may provide liquid to the receptacle 104, e.g. drops or a spray of oil or water (see, for instance, WO 2016062513 A1).

Alternatively or additionally, the dispensing assembly 182 may dispense food ingredients 176 which do not need to be cooled, such as spice.

Alternatively or additionally, food ingredients 176 such as spice may be dispensed at the end of the cooking process, e.g. before the receptacle 104 is taken out/disengaged from the food transfer assembly 116.

In some embodiments, the dispensing assembly 182 comprises a moveable member, e.g. plunger(s), wiper(s), etc., for forcing the food ingredients 176 into the receptacle 104. A relatively simple system that relies on gravity to move the food ingredients 176, once the flap is moved, is shown in FIGs. 5A and 5B.

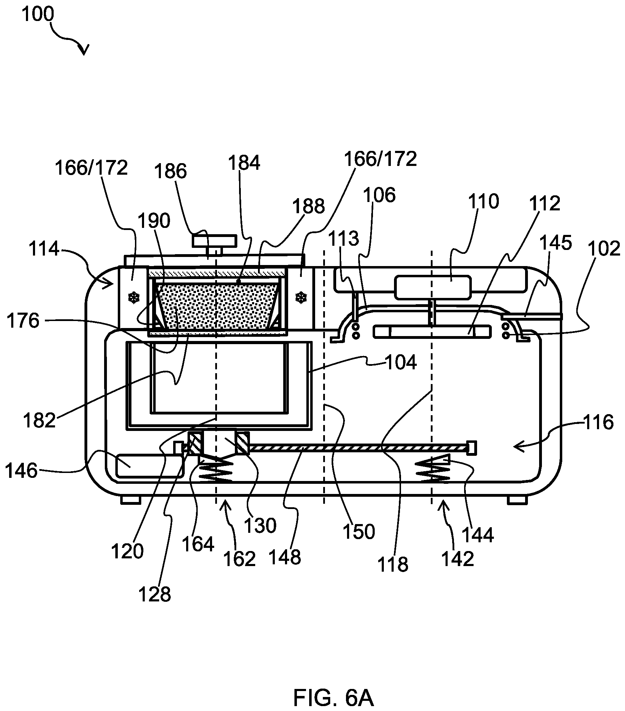

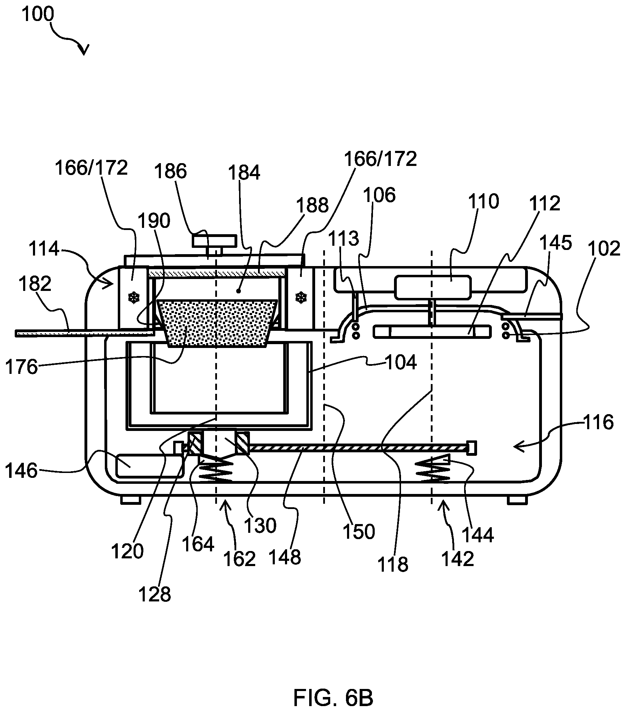

Alternatively or additionally, and referring to FIGs. 6A and 6B, the dispensing assembly 182 may include dispensing control element(s) 190 for controlling a rate at which the food ingredients 176 are dispensed into the receptacle 104.

As shown in FIGs. 6A and 6B, the food ingredients 176 may be frozen as a solid block. In this case, the dispensing control element(s) 190, e.g. in the form of rib(s), may assist to slow or dampen the fall of such a solid block into the receptacle 104, e.g. once the period during which the food ingredients 176 are stored, e.g. cooled, in the storage container 184 is complete.

As shown in FIG. 6B, the dispensing control elements 190 in the form of ribs may hold and release the solid block of food ingredients 176 during thawing. In other embodiments, the dispensing control element(s) 190 may comprise, for instance, flexible finger(s) arranged at the base of the storage container 184 and/or a food guiding system.

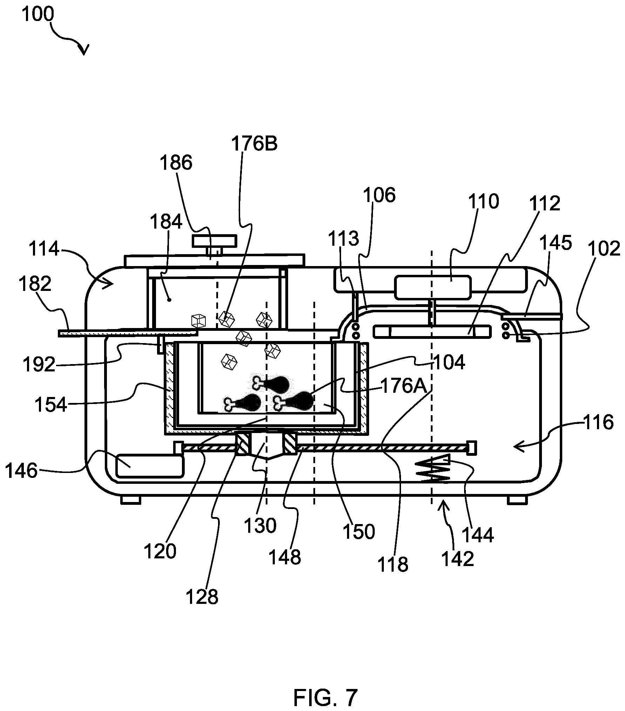

In some embodiments, such as shown in FIG. 7, the dispensing assembly 182 is controllable, e.g. automatically controllable by the control system, to add second food ingredients 176B during cooking of first food ingredients 176A.

In such embodiments, the receptacle 104, e.g. the pan with the basket inserted in the pan, may be moved to the second position 120 when it is time to add the second food ingredients 176B. The dispensing assembly 182, e.g. via movement of the flap, may dispense the second food ingredients 176B into the receptacle 104 in which the first food ingredients 176A are already received.

In some embodiments, such as shown in FIG. 7, the dispensing assembly 182 is configured to dispense the food ingredients 176, e.g. the second food ingredients 176B, into the receptacle 104 in response to movement of the receptacle 104 via the receptacle transfer assembly 116.

For example, an opening system may open the storage container 184 according to movement of the receptacle 104, e.g. pan. For instance, the receptacle 104 may only move to the second position 120 when it is time to add food ingredients 176, e.g. second ingredients 176B, for instance that has been stored chilled using the cooling system 152.

In some embodiments, such as shown in FIG. 7, the dispensing assembly 182 comprises a catch 192 arranged to activate the dispensing assembly 182, e.g. the flap, in response to movement of the receptacle 104 against the catch 192.

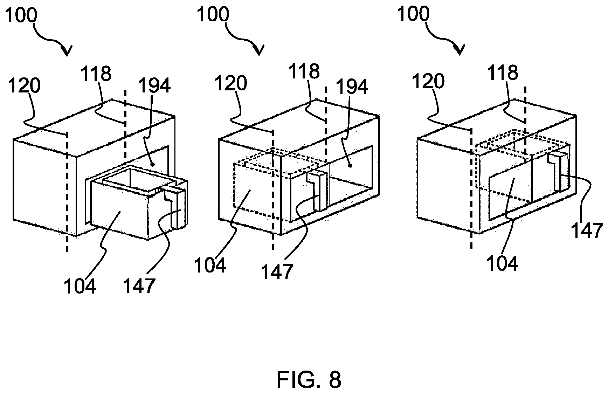

It is noted at this point that the embodiments shown in FIGs. 1A to 7 each have a side-by-side arrangement of the first and second positions 118, 120, as also schematically represented in FIG. 8. In such embodiments, the food preparation process(es), e.g. cooling, may, for instance, be implemented at a left hand second position 120, and subsequently the receptacle 104 may be shifted to the right in order to reach the first position 118.

Referring to FIG. 8, the receptacle 104, e.g. pan, may be inserted into a main chamber 194 and may be shifted to the right and to the left in the main chamber 194 to adopt the first position 118 and the second position 120, respectively.

It is reiterated that the movement of the receptacle 104 may be manual or preferably automatic using the drive system 146. The drive system 146 may, for example, be configured to at least move the receptacle 104 to the first position 118.

In some embodiments, the drive system 146 is configured to move the receptacle 104 to the second position 120, e.g. as well as moving the receptacle 104 to the first position 118. The latter may be employed for more advanced automation, for example for implementing intermediate food preparation process(es) such as adding the second food ingredients 176B.

In some embodiments, the receptacle 104 can be removed at one position only e.g. from the third/insert position 150, in other embodiments the receptacle 104 can be removed at any position.

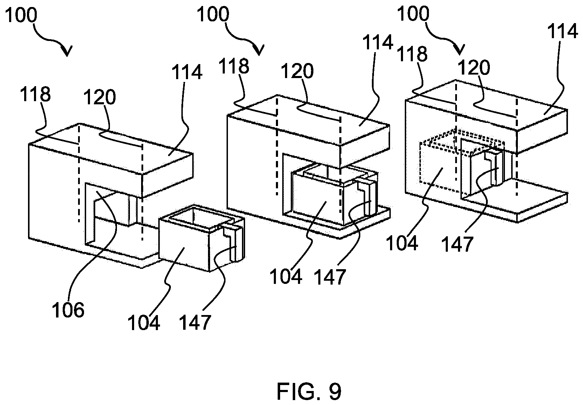

In some embodiments, such as shown in FIGs. 9 to 12, the cooking chamber member 106 and the food preparation assembly 114 are arranged one behind the other so that one of the cooking chamber member 106 and the food preparation assembly 114 is closer to a front of the kitchen appliance 100 than the other of the cooking chamber member 106 and the food preparation assembly 114 when the kitchen appliance 100 is positioned for use.

In such embodiments, the receptacle transfer assembly 116 is configured to allow, e.g. guide, forwards-backwards movement of the receptacle 104 between the first position 118 and the second position 120.

Whilst the back position, which corresponds to the first position 118 in FIG. 9, may be less favorable to reach, this architecture may be more appropriate than the side-by-side arrangement of the cooking chamber member 106 and the food preparation assembly 114 for some kitchen spaces. The receptacle 104 may, for example, take the form of a drawer that moves along a single axis: forwards/in and backwards/out. Accordingly, the receptacle transfer assembly 116 may only require a relatively simple one-dimensional receptacle sliding mechanism.

To make the back position easier to reach, the front side opening of the kitchen appliance's 100 housing can be enlarged, as shown in FIG. 9.

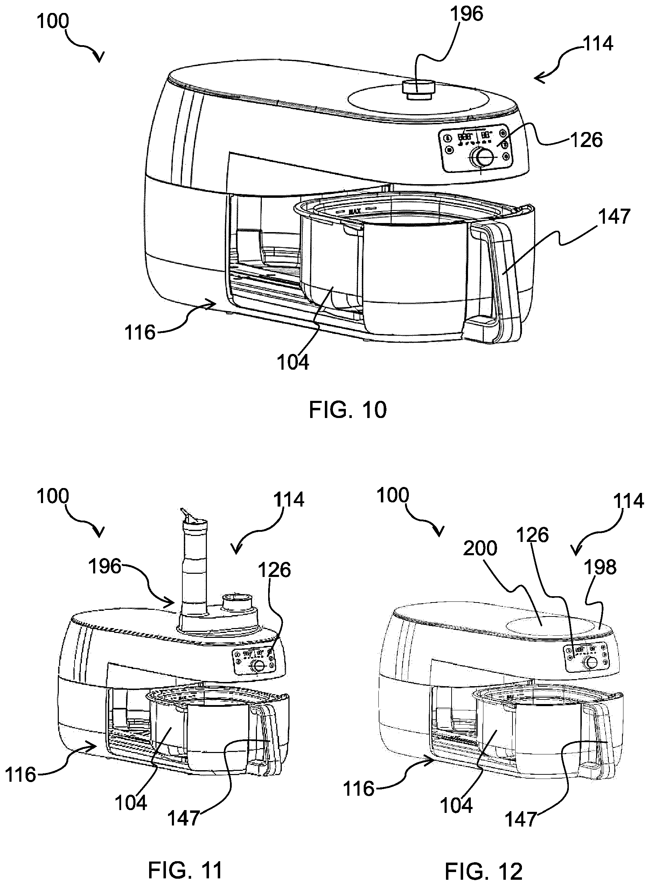

In some embodiments, such as shown in FIGs. 10 to 12, the food preparation assembly 114 comprises a mechanical food processing system 196 for mechanically processing the food ingredients 176. The mechanical food processing system 196 may enable mechanical processing of the food ingredients 176, e.g. cutting, slicing, spiralizing, and/or extruding of the food ingredients 176, to be conveniently implemented in the same kitchen appliance 100 that subsequently heats/cooks the mechanically processed food ingredients 176.

In some embodiments, the mechanical food processing system 196 comprises one or more of a food cutting system, a food slicing system, a food spiralizing system, and a food extruding system.

In some embodiments, such as shown in FIG. 10, the mechanical food processing system 196 comprises an integrated food processing tool. Alternatively or additionally, and referring to FIG. 11, the mechanical food processing system 196 comprises a cutter, e.g. a cube cutter, driven by a hand blender supported at the kitchen appliance's 100 housing.

In some embodiments, the food processing assembly 114 comprises a support for supporting a hand blender, e.g. a bar blender, so that the hand blender is permitted to mechanically process food ingredients 176 that can be received in the receptacle 104, e.g. when the receptacle is moved to or is at the second position 120.

In some embodiments, such as shown in FIG. 12, the food processing assembly 114 comprises a manual mechanical food processing system 196, for example a manual mechanical food processing system 196 that includes a housing portion 198 of the kitchen appliance 100 the delimits an opening 200, e.g. an opening 200 arranged at a top of the housing portion 198. The housing portion 198 may support part of one or more manual mechanical food processing tools, e.g. cutting tools, such as a fries press. The manual mechanical food processing tool(s) may protrude through the opening 200 to reach food ingredients 176, e.g. food ingredients 176 received in the receptacle 104 at the second position 120.

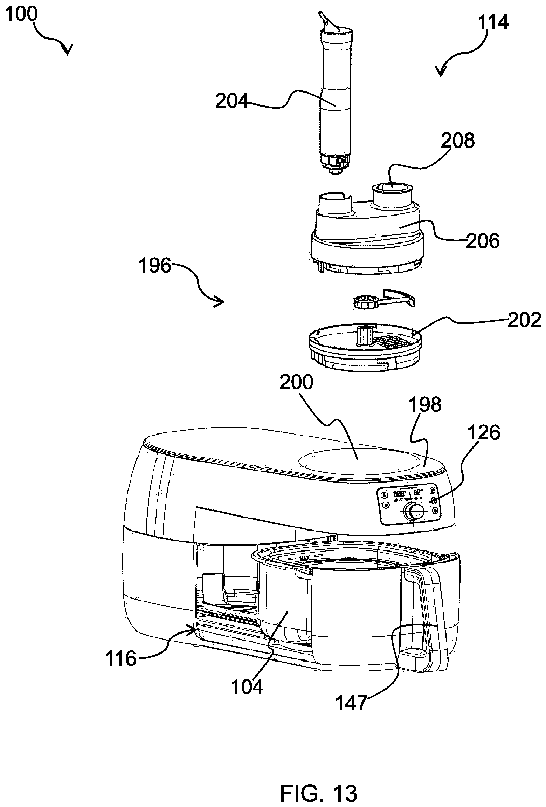

FIG. 13 provides an exploded view of the kitchen appliance 100 shown in FIG. 11. FIG. 13 shows the cube cutter 202, for example a cube cutter 202 as disclosed in EP 2744378 B1, EP 2741649 B1 and EP 2887848 B1, being detachably mounted on and/or in the housing portion 198 of the kitchen appliance 100.

FIG. 13 also shows a drive unit 204, e.g. a hand held drive unit 204, for driving the cube cutter 202, and a lid 206 delimiting a feeding tube 208 through which food ingredients 176, e.g. second food ingredients 176B, are deliverable towards the cube cutter 202.

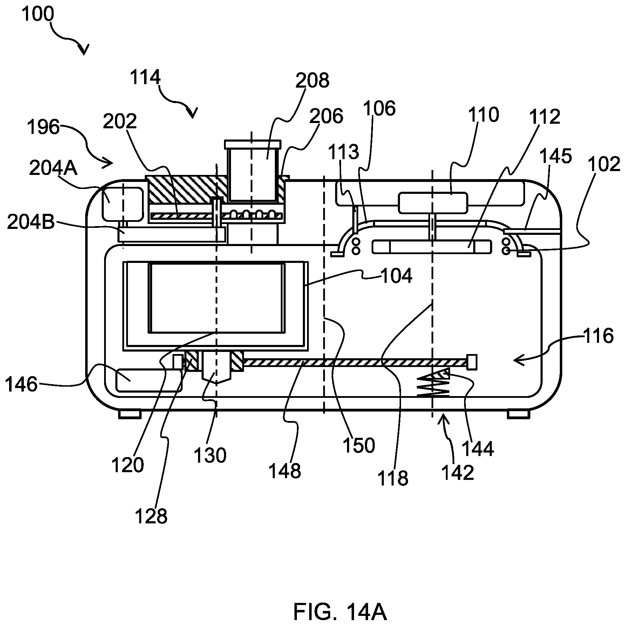

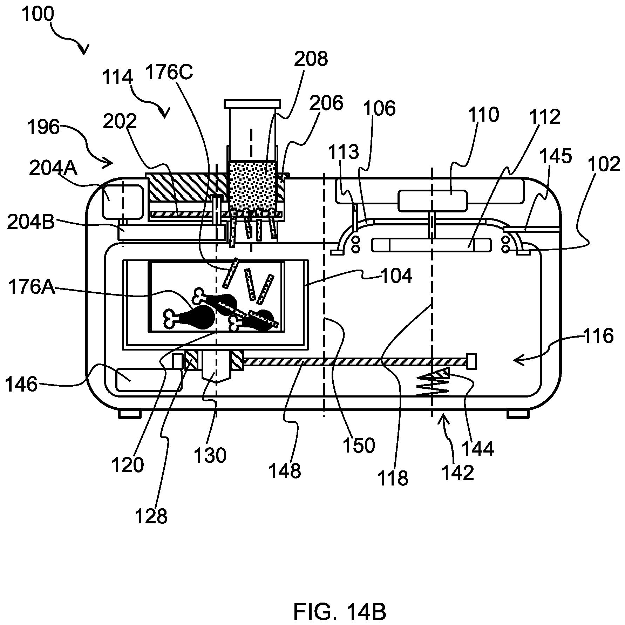

FIGs. 14A and 14B show another example of a kitchen appliance 100 whose food preparation assembly 114 comprises a mechanical food processing system 196. In this case, the drive unit 204A, 204B is integrated into, e.g. is non-detachable from, the kitchen appliance 100. The drive unit 204A, 204B may include a (further) motor 204A and a gear box 204B for transferring drive from the motor 204A to a food processing tool 202, e.g. a detachable/exchangeable food processing tool 202, such as a julienne disc.

As shown in FIG. 14B, food ingredients 176 may be mechanically processed as they are being dispensed into the receptacle 104 when the receptacle 104 is at the second position 120.

In other words, the receptacle 104 may be arranged relative to the mechanical food processing system 196 to receive mechanically processed food ingredients 176C when the receptacle 104 is at the second position 120.

In a non-limiting example, first food ingredients 176A requiring a longer cooking time may be pre-cooked via the receptacle 104 being at the first position 118. After a certain time period, second food ingredients 176B requiring a shorter cooking time may be added to the receptacle 104. The latter may involve interrupting cooking of the first food ingredients 176A, transferring the receptacle 104 to the second position 120, mechanically processing the second food ingredients 176B into the receptacle 104 (so that the receptacle 104 receives mechanically processed food ingredients 176C), and transferring the receptacle 104 back to the first position 118 to complete cooking of the first food ingredients 176A and the mechanically processed food ingredients 176C.

It is more generally noted that the second food ingredients 176B, e.g. the mechanically processed food ingredients 176C, need not contact the first food ingredients 176A in the receptacle 104. In some embodiments, a divider, e.g. a grid, may be arranged in the receptacle 104, e.g. above the first food ingredients 176A.

The divider may assist to prevent mixing of the first food ingredients 176A with the second food ingredients 176B, e.g. the mechanically processed food ingredients 176C.

Alternatively or additionally, the drive system 146 may be configured to move the receptacle 104 in a reciprocating manner, e.g. left/right and/or forwards/backwards, to distribute food ingredients 176 in the receptacle 104.

For example, following mechanical processing of food ingredients 176 into the receptacle 104, the receptacle 104 may be automatically moved, e.g. by the control system controlling the drive system 146, to distibute the mechanically processed food ingredients 176C in the receptacle 104.

Alternatively or additionally, the receptacle 104 may comprise, e.g. may be in the form of, a compartment with a closed bottom that is able to retain liquid, e.g. soup, therein.

Such a compartment may function, for example, in the manner of a soup container or wok.

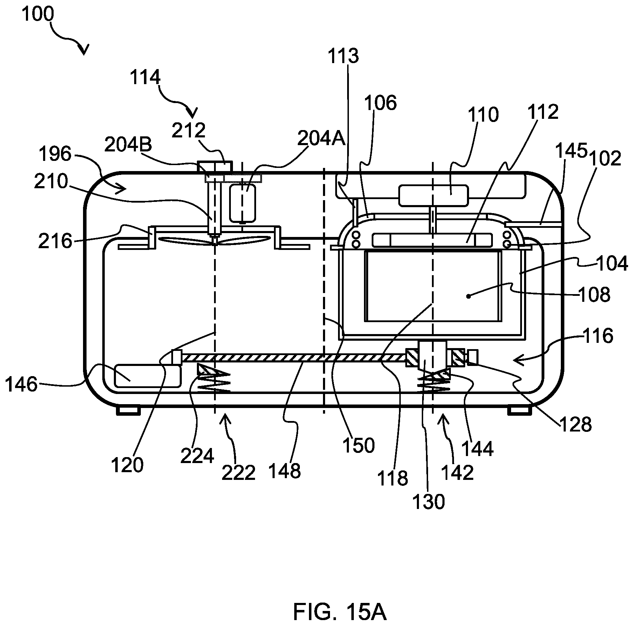

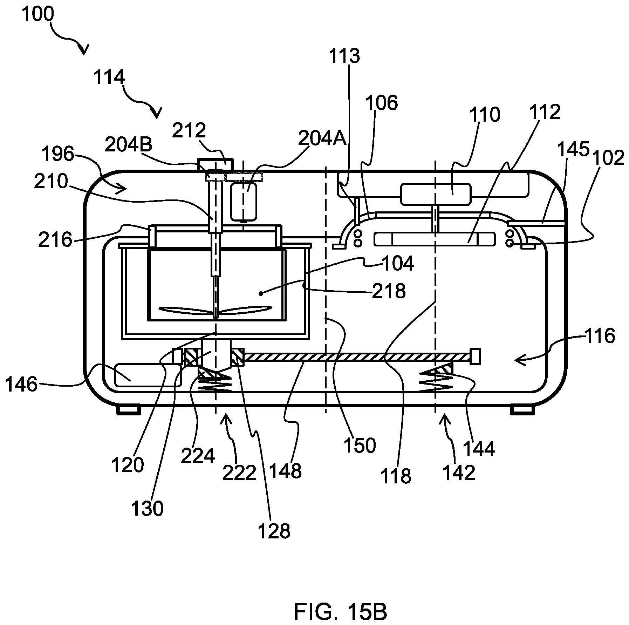

In some embodiments, such as shown in FIGs. 15A and 15B, the mechanical food processing assembly 196 is configured to mechanically process food ingredients 176 in the receptacle 104 when the receptacle 104 is at the second position 120.

In such embodiments, the mechanical food processing assembly 196 may include a tool or tool element(s) 210 that can be moved into the receptacle 104 when the receptacle 104 is at the second position 120.

The tool or tool element(s) 210 can be used to manipulate the food ingredients 176, for example to stir, mix or blend the food ingredients 176.

The tool or tool element(s) 210 can be moveable into and retractable from the receptacle 104, for example by the tool or tool element(s) 210 having a telescopic tool shaft.

Following mechanical food processing and retraction of the tool or tool element(s) 210, the receptacle 104 may be moved, e.g. moved back, to the first position 118 via the receptacle transfer assembly 116.

The entire tool may be moveable into the receptacle 104 or at least tool element(s) 210, e.g. mixing arms, may be moveable into the receptacle 104.

In some embodiments, movement of the tool or tool element(s) 210 may be triggered by changing a rotation direction. In a non-limiting example, telescopic elements of the tool are moveable via a threaded coupling during rotation.

The mechanical food processing system 196 may include a safety system to enable easy removal of the tool or tool element(s) 210 from the receptacle 104 in case of a fault, such as a power supply interruption. The tool or tool element(s) 210 remaining in the receptacle 104 may risk blocking access to, or transfer of, the receptacle 104.

In some embodiments, such as shown in FIGs. 15A and 15B, the safety system is provided by the shaft bearing system being housed in a lock 212. The lock 212 can be released to enable movement of the tool or tool element(s) 210 upwards out of the receptacle 104.

More generally, the kitchen appliance 100 may include a mechanical food processing chamber member 216 for cooperating with the receptacle 104, when the receptacle 104 is in the second position 120, so that the receptacle 104 and the mechanical food processing chamber member 216 define wall sections of a mechanical food processing chamber 218.

In such embodiments, the mechanical food processing system 196 may be arranged to mechanically process food ingredients 176 in the mechanical food processing chamber 218.

In some embodiments, such as shown in FIGs. 15A and 15B, the mechanical food processing chamber member 216 comprises, e.g. is in the form of, a hood for closing, e.g. sealing, the receptacle 104 from above the receptacle 104 when the kitchen appliance 100 is orientated for use.

In some embodiments, the receptacle transfer assembly 116 comprises a height adjustment assembly 222 configured to enable adjustment of height separation between the receptacle 104 and the mechanical food processing chamber member 216. In such embodiments, the separation between the receptacle 104 and the mechanical food processing chamber member 216, e.g. hood, may be reduced by the height adjustment assembly 222 when the receptacle 104 is moved to the second position 120.

The height adjustment assembly 222 can be configured in any suitable manner. In some embodiments, such as shown in FIGs. 15A and 15B, the height adjustment assembly 222 comprises a spring-loaded wedge 224 arranged to adjust the height separation between the receptacle 104 and the mechanical food processing chamber member 216 according to positioning of the receptacle 104, e.g. and in particular the engagement member 130, along the spring-loaded wedge 224.

It is noted, for the avoidance of doubt, that movement of mechanical food processing is not limited to rotation. For example, the mechanical food processing system 196 may be configured to manipulate the food ingredients 176 in other ways, for example by punching hole(s) and/or recess(es) in the food ingredients 176. Punching such hole(s) and/or recess(es) may, for example, be useful in the context of baking. For instance, a shape or pattern may be punched into pre-heated food.

It is also noted that movement of the receptacle 104 can contribute to food manipulation, e.g. mixing or turning over of food.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (100) comprising:
a heating system (102);
a receptacle (104) for receiving food ingredients;
a cooking chamber member (106) for cooperating with the receptacle so that the receptacle and the cooking chamber member define wall portions of a cooking chamber (108), the heating system being arranged to heat said cooking chamber;
a food preparation assembly (114) for implementing at least one food preparation process of a type that is not implementable in the cooking chamber;
a receptacle transfer assembly (116) configured to permit the receptacle to move between at least:
a first position (118) in which the receptacle and the cooking chamber member cooperate with each other to define the wall portions of the cooking chamber to enable a food cooking process to be implemented, and
a second position (120) in which the receptacle is released from the cooking chamber member and is positioned relative to the food preparation assembly to enable the at least one food preparation process to be implemented.

2. The kitchen appliance (100) according to claim 1, wherein the food preparation assembly (114) comprises a cooling system (152) for cooling the food ingredients.

3. The kitchen appliance (100) according to claim 2, wherein the cooling system (152) comprises at least one of:
a powered cooling system for active cooling of the food ingredients; and
a passive cooling system comprising one or more cooling blocks (172); and a holder (174) for the cooling block(s), the holder being arranged to provide cooling to the food ingredients when the cooling block(s) are received in the holder.

4. The kitchen appliance (100) according to any one of claims 1 to 3, wherein the food preparation assembly (114) comprises a mechanical food processing system (196) for mechanically processing the food ingredients.

5. The kitchen appliance (100) according to claim 4, wherein the mechanical food processing system (196) comprises one or more of a food cutting system, a food slicing system, a food spiralizing system, and a food extruding system.

6. The kitchen appliance (100) according to any one of claims 1 to 5, wherein the food preparation assembly (114) comprises a dispensing assembly (182) for dispensing food ingredients into the receptacle (104) when the receptacle is moved to or at the second position (120).

7. The kitchen appliance (100) according to any one of claims 1 to 6, wherein the receptacle transfer assembly (116) is for engaging with the receptacle (104), the receptacle transfer assembly being configured to permit the receptacle to move between at least the first position (118) and the second position (120) while the receptacle remains engaged with the receptacle transfer assembly.

8. The kitchen appliance (100) according to any one of claims 1 to 7, wherein the receptacle transfer assembly (116) comprises a drive system (146) for driving movement of the receptacle (104) between at least the first position (118) and the second position (120).

9. The kitchen appliance (100) according to any one of claims 1 to 8, comprising a control system configured to recommend and/or control movement of the receptacle (104) between at least the first position (118) and the second position (120).

10. The kitchen appliance (100) according to any one of claims 1 to 9, wherein the cooking chamber member (106) comprises a hood member for closing the receptacle (104) from above the receptacle.

11. The kitchen appliance (100) according to any one of claims 1 to 10, wherein the receptacle transfer assembly (116) comprises:
a height adjustment arrangement (142) configured to enable adjustment of height separation between the receptacle (104) and the cooking chamber member (106); and/or
a height adjustment system (162) configured to enable adjustment of height separation between the receptacle and at least part of the food preparation assembly (114).

12. The kitchen appliance (100) according to any one of claims 1 to 11, wherein the receptacle transfer assembly (116) is arranged to permit linear displacement of the receptacle (104) between the first position (118) and the second position (120); optionally wherein said linear displacement is in a plane that is parallel to a plane of a kitchen counter-top on which the kitchen appliance is disposed in use.

13. The kitchen appliance (100) according to any one of claims 1 to 12, wherein the cooking chamber member (106) and the food preparation assembly (114) are arranged so that respective front portions of the cooking chamber member and the food preparation assembly are arranged side-by-side when the kitchen appliance is positioned for use, wherein the receptacle transfer assembly (116) is configured to allow left-right movement of the receptacle between the first position (118) and the second position (120).

14. The kitchen appliance (100) according to any one of claims 1 to 12, wherein the cooking chamber member (106) and the food preparation assembly (114) are arranged one behind the other so that one of the cooking chamber member and the food preparation assembly is closer to a front of the kitchen appliance than the other of the cooking chamber member and the food preparation assembly when the kitchen appliance is positioned for use, wherein the receptacle transfer assembly (116) is configured to allow forwards-backwards movement of the receptacle between the first position (118) and the second position (120).

15. The kitchen appliance (100) according to any one of claims 1 to 14, wherein the heating system (102) comprises a heating element and a circulation system (110, 112) for circulating air heated by the heating element in the cooking chamber (108); optionally wherein the circulation system is arranged so that the heated air traverses a height of the cooking chamber when the kitchen appliance is orientated for use.
